# EUROPEAN PATENT APPLICATION

(11) **EP 1 813 317 A1**
(43) Date of publication of application: **01.08.2007**
(21) Application number: 06001977.5
(22) Date of filing: 31.01.2006
(51) Int. Cl.: A63B 22/02, B65G 15/34

(54) **Endless belt for treadmill**

(71) Applicant: Kuo, Hai-Pin, Tainan City (TW)
(72) Inventor: Kuo, Hai-Pin, Tainan City (TW)
(74) Representative: Casalonga, Axel

(57) **Abstract**

A belt device includes one or more intermediate layers each having one or more conductive wires for reducing or for eliminating static electricity. The intermediate layers each includes a number of longitudinal fibers arranged parallel to the conductive wire, and/or includes a number of lateral fibers arranged parallel to the conductive wire. An outer peripheral layer may be attached onto the intermediate layer, or having the intermediate layer engaged into the outer peripheral layer, or an inner peripheral layer may be attached onto the intermediate layer, for allowing the intermediate layer to be disposed between the outer and the inner peripheral layers.

## Description

The present invention relates to an endless belt device for an exercise treadmill, and more particularly to an endless belt device for an exercise treadmill having a structure for reducing or eliminating static electricity.

### 2. Description of the Prior Art.

Typical exercise treadmill comprise an endless belt device disposed on rollers to present a walking surface in an inclined plane for supporting a user thereon and for allowing the user to conduct walking or jogging exercises or the like.

For example, U.S. Patent No. 6,280,362 to Dalebout et al. discloses one of the typical exercise treadmills of the type used in gymnasiums, health clubs, and sanitaria to provide a controlled form of exercise within a confined indoor space, and the typical exercise treadmill also comprises an endless belt device disposed on a relatively large number of rollers that are disposed transversely in a supporting frame, for forming a walking surface in an inclined plane and for supporting a user thereon and for allowing the user to conduct various exercises.

Some of the electrical facilities may further be attached to the exercise treadmills for sensing or detecting or measuring the rotational or moving speed of the endless belt, and/or various information of the exercisers, such as the breath, the heart beat, or other health or body condition of the exercisers.

For example, U.S. Patent No. 5,062,632 to Dalebout et al. discloses one of the typical exercise treadmills having a microprocessor to generate signals and in order to control the exerciser.

However, the endless belt of the typical exercise treadmills are normally made of polymer materials, such as polyester, and may generate static electricity when the endless belt is moved or rotated around the rollers, and the static electricity may affect the sensing or detecting or measuring the rotational or moving speed of the endless belt or of the information of the exercisers.

The present invention has arisen to mitigate and/or obviate the afore-described disadvantages of the conventional belt devices for exercise treadmills.

The primary objective of the present invention is to provide an endless belt device for attaching to an exercise treadmill and including a structure for reducing or eliminating static electricity and for allowing various information to be effectively sensed or detected or measured by the electrical facilities.

In accordance with one aspect of the invention, there is provided a belt device comprising at least one intermediate layer including at least one conductive wire engaged therein for reducing or for eliminating static electricity and for allowing various information to be effectively sensed or detected or measured by the electrical facilities.

The intermediate layer includes a number of longitudinal fibers arranged parallel to the conductive wire, and/or includes a number of lateral fibers arranged parallel to the conductive wire and alternatively interwoven with the longitudinal fibers for forming a woven or non-woven cloth type or structure.

An outer peripheral layer may further be provided and attached onto the intermediate layer, or having the intermediate layer engaged into the outer peripheral layer. An inner peripheral layer may further be provided and attached onto the intermediate layer.

Further objectives and advantages of the present invention will become apparent from a careful reading of the detailed description provided hereinbelow, with appropriate reference to the accompanying drawings.
FIG. 1 is a partial plan and exploded view of an endless belt device in accordance with the present invention;
FIG. 2 is an enlarged partial cross sectional view of the endless belt device;
FIG. 3 is a partial plan schematic view illustrating an intermediate layer of the endless belt;
FIG. 4 is a partial side or end plan schematic view of the intermediate layer of the endless belt device,
FIG. 5 is an enlarged partial cross sectional view of the intermediate layer of the endless belt device;
FIG. 6 is an enlarged partial cross sectional view similar to FIG. 5, illustrating the other arrangement of the intermediate layer of the endless belt device;
FIG. 7 is an enlarged partial cross sectional view similar to FIGS. 5 and 6, illustrating the further arrangement of the intermediate layer of the endless belt device; and
FIG. 8 is a partial cross sectional and exploded view illustrating the other arrangement of the endless belt device.

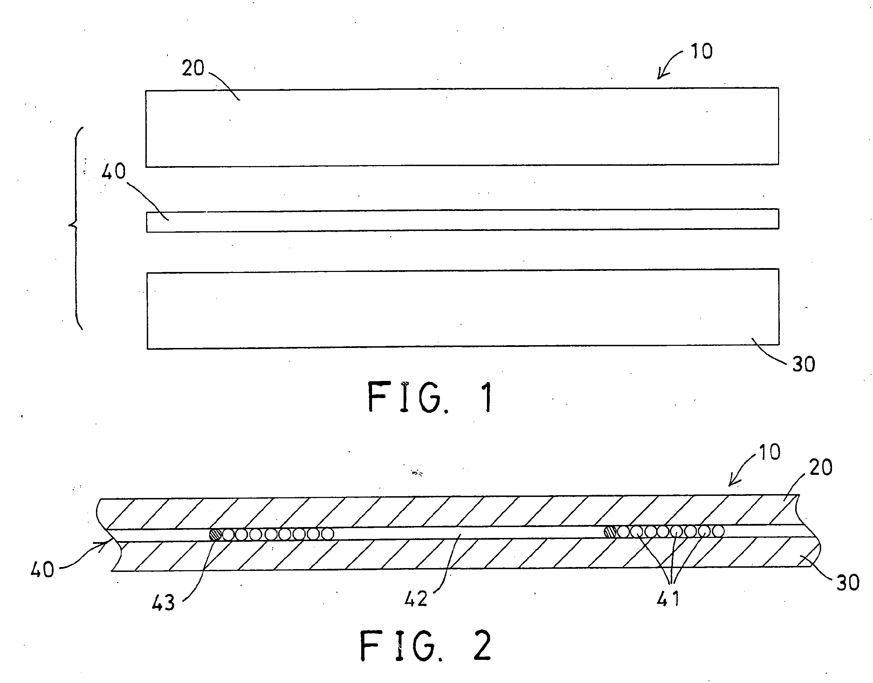

Referring to the drawings, and initially to FIGS. 1-3, an endless belt device 10 in accordance with the present invention is provided or arranged for attaching to an exercise treadmill (not shown) of the type used in gymnasiums, health clubs, and sanitaria to provide a controlled form of exercise within a confined indoor space, and the endless belt device is disposed on a relatively large number of rollers that are disposed transversely in a supporting frame of the exercise treadmill, for forming a walking surface in an inclined plane and for supporting a user thereon and for allowing the user to conduct various exercises.

The endless belt device 10 comprises an upper or outer peripheral layer 20 (FIGS. 1-2), and a lower or inner peripheral layer 30, and/or one or more insert or intermediate layers 40 (FIGS. 1-4) disposed or engaged between the outer and the inner peripheral layers 20, 30. The outer and the inner peripheral layers 20, 30 are preferably made of plastic or polymer or synthetic fibers, such as polyvinyl chloride, or the like.

The intermediate layers 40 each includes a number of longitudinal threads or fibers 41 and a number of lateral threads or fibers 42 alternatively interwoven together to form the intermediate layer 40 of a woven or non-woven cloth type or structure. The longitudinal threads or fibers 41 and the lateral threads or fibers 42 of the intermediate layers 40 may be made of various natural fiber materials, such as natural plant fibers, or plastic or polymer or synthetic fibers, such as polyester, etc.

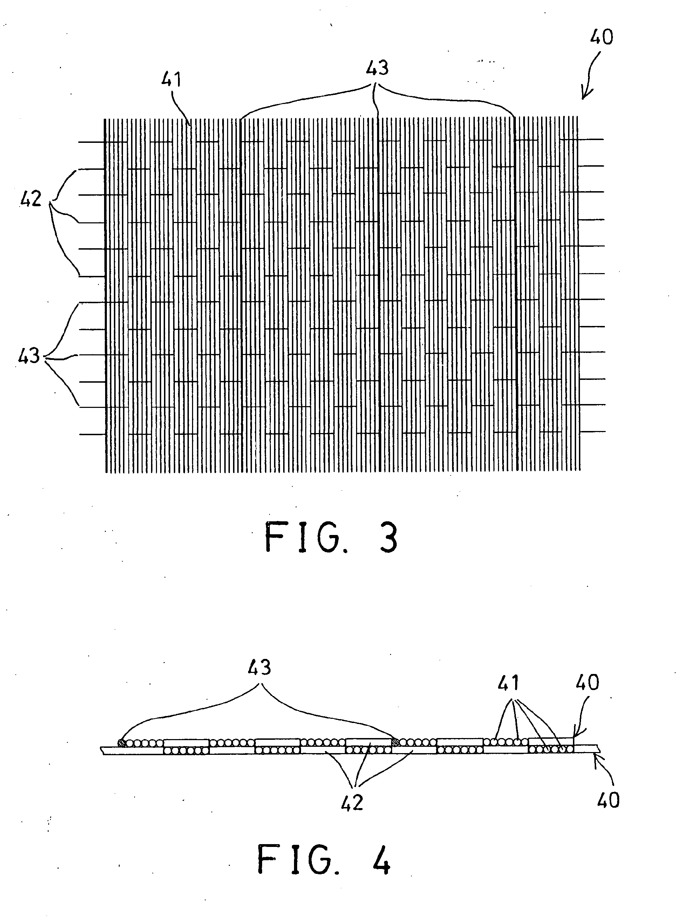

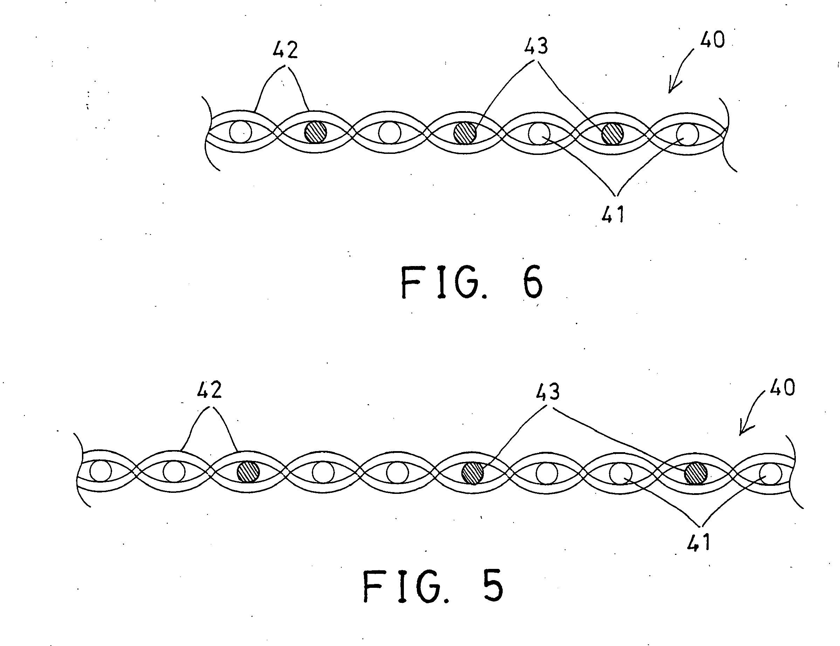

The intermediate layers 40 each further includes one or more conductive metallic cables or wires 43 (FIGS. 5-7) interwoven in either or both of the longitudinal threads or fibers 41 and the lateral threads or fibers 42. For example, the intermediate layers 40 may each include one or more conductive metallic cables or wires 43 interwoven in and/or parallel to the longitudinal threads or fibers 41 and/or in the lateral threads or fibers 42 (FIG. 3). The interwoven conductive metallic cables or wires 43 of the intermediate layers 40 may be electrically contacted with each other and may be used or provided for reducing or eliminating static electricity and for allowing various information to be effectively sensed or detected or measured by the electrical facilities.

In operation, the endless belt device 10 may be rotated or moved in a relatively large moving speed relative to the supporting rollers, and a friction or rubbing or abrasion may be generated between the endless belt device and the supporting rollers, and thus a static electricity may be generated by the friction or rubbing or abrasion between the endless belt device and the supporting rollers. The interwoven conductive metallic cables or wires 43 of the intermediate layers 40 may be used to suitably reduce or eliminate the static electricity.

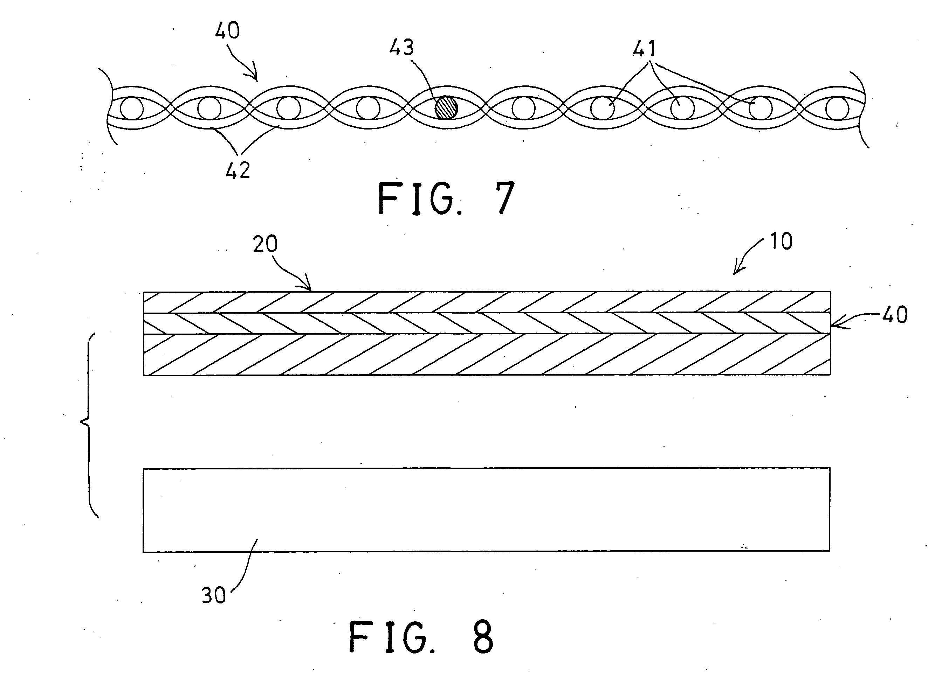

As shown in FIG. 8, alternatively, the intermediate layers 40 may be engaged in either the outer or the inner peripheral layer 20, 30, or may be solidly engaged and embedded in either the outer or the inner peripheral layer 20, 30 to form an integral or one piece structure.

Accordingly, the endless belt device for the exercise treadmill in accordance with the present invention includes a structure for reducing or eliminating static electricity and for allowing various information to be effectively sensed or detected or measured by the electrical facilities.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. A belt device comprising:
at least one intermediate layer including at least one conductive wire engaged therein for eliminating static electricity.

2. The belt device as claimed in claim 1, wherein said at least one intermediate layer includes a plurality of longitudinal fibers arranged parallel to said at least one conductive wire.

3. The belt device as claimed in claim 1, wherein said at least one intermediate layer includes a plurality of lateral fibers arranged parallel to said at least one conductive wire.

4. The belt device as claimed in claim 1 further comprising an outer peripheral layer attached onto said at least one intermediate layer.

5. The belt device as claimed in claim 4, wherein said at least one intermediate layer is engaged in said outer peripheral layer.

6. The belt device as claimed in claim 1 further comprising an inner peripheral layer attached onto said at least one intermediate layer.
